Europäisches Patentamt

European Patent Office

Office européen des brevets

(11) Veröffentlichungsnummer: **0 169 371**
**A1**

## (12) EUROPÄISCHE PATENTANMELDUNG

(21) Anmeldenummer: 85107562.2

(22) Anmeldetag: 19.06.85

(51) Int. Cl.⁴: **F 21 V 9/16**
**F 21 K 2/00**

(30) Priorität: 28.06.84 DE 3423895

(43) Veröffentlichungstag der Anmeldung:
29.01.86 Patentblatt 86/5

(84) Benannte Vertragsstaaten:
AT BE CH DE FR GB IT LI LU NL SE

(71) Anmelder: THERA Gesellschaft für Patentverwertung mbH
Schmidschneiderstrasse 15
D-8036 Herrsching(DE)

(72) Erfinder: Herold, Wolf-Dietrich, Dr.
Höhenweg 13
D-8031 Seefeld/Obb.(DE)

(74) Vertreter: Strehl, Schübel-Hopf, Schulz
Widenmayerstrasse 17 Postfach 22 03 45
D-8000 München 22(DE)

(54) Bestrahlungsgerät.

(57) Ein Bestrahlungsgerät weist eine Leuchtstoffröhre (1) und eine die Leuchtstoffröhre umgebende Hülse (11) auf, die aus einem mit Fluoreszenzstoff dotierten strahlungsdurchlässigen Material besteht. Der Fluoreszenzstoff absorbiert die von der Leuchtstoffröhre (10) emittierte Strahlung und fluoresziert in einem von seiner chemischen Zusammensetzung abhängigen Spektrum. Diese innerhalb der Hülse (11) erzeugte Fluoreszenzstrahlung wird durch Totalreflexion innerhalb der Hülse in Umfangs- und Axialrichtung geführt und kann an den axialen Enden der Hülse oder an einer parallel zur Achse der Leuchtstoffröhre (10) vorgesehenen Lichtaustrittsfläche entnommen werden.

FIG. 4

EP 0 169 371 A1

Patentverwertung mbH

EPA-23046                                    19. Juni 1985

0169371

## Bestrahlungsgerät

Die Erfindung betrifft ein Bestrahlungsgerät der im Oberbegriff des im Anspruchs 1 angegebenen Gattung.

Gegenüber Festkörperstrahlern (zum Beispiel Glühwendeln) oder Kurzbogenstrahlern, die normalerweise ein kontinuierliches breites Strahlungsspektrum mit erheblichen Anteilen im Infrarotbereich erzeugen, haben Leuchtstoffröhren die Eigenschaft, daß die von ihnen emittierte Strahlung auf ein verhältnismäßig schmales Spektralband begrenzt ist. Leuchtstoffröhren eignen sich daher insbesondere für solche Anwendungsfälle, bei denen für die Bestrahlung des jeweiligen Objektes nur ein bestimmter Wellenlängenbereich nutzbar ist. Insbesondere können Leuchtstoffröhren so ausgelegt sein, daß sie keine nennenswerte Infrarot- und/oder keine häufig unerwünschten Ultraviolettanteile erzeugen, so daß sich die bei anderen Strahlungsquellen erforderlichen Kühl- und Filtereinrichtungen erübrigen.

Eine Schwierigkeit beim Einsatz von Leuchtstoffröhren besteht jedoch darin, daß sich die von ihnen emittierte Strahlung nur schlecht auf flächenmäßig begrenzte, insbesondere etwa punktförmige, Bestrahlungsorte fokussieren läßt. Bei einem Bestrahlungsgerät für Dentalzwecke, wie es aus der deutschen Gebrauchsmusterschrift Nr. 8 228 416 bekannt ist, ist eine Leuchtstoffröhre mit einem kugelkalottenförmigen Reflektor teilweise umgeben, demgegenüber eine Sammellinse angeordnet ist. Über diese Anordnung wird versucht, das von der Leuchtstoffröhre emittierte Licht auf das Eintrittsende eines Lichtleiters zu konzentrieren, über den die Strahlung beispielsweise auf eine Zahnkavität gerichtet wird, um eine dort eingebrachte Kunststoff-Füllmasse zu polymerisieren. Wegen der räumlichen Ausdehnung der Leuchtstoffröhre gelingt eine Fokussierung mit diesen Mitteln jedoch nur mangelhaft, so daß ein großer Teil der gesamten

- 2 -

0169371

emittierten Strahlung nicht ausgenutzt wird und damit der bei Leuchtstoffröhren an sich gegebene Vorteil eines hohen elektrisch-optischen Wirkungsgrades größtenteils verloren geht.

Die Problematik der Fokussierung auf einen linienförmigen Bestrahlungsort ist zwar geringer, weil hier mit die Leuchtstoffröhre umgebenden teilzylindrischen, im Querschnitt beispielsweise teilelliptisch geformten Reflektoren gearbeitet werden kann. Leuchtstoffröhren haben jedoch auch im Querschnitt notwendigerweise eine vorgegebene Ausdehnung und können daher nicht als linienförmige Strahlungsquellen betrachtet werden, so daß auch in einem solchen Fall der Fokussierungsgrad begrenzt ist.

In vielen Anwendungsfällen ist eine gleichmäßige Leuchtdichte über den gesamten Austrittsquerschnitt von Vorteil. So kommt es bei der Einkopplung des Lichtes eines Halogenbrenners in einen Lichtleiter durch einen elliptischen Reflektor oder auch bei der Ausleuchtung von Dias zu einer ungewünschten unterschiedlichen Leuchtdichte über der bestrahlten Fläche.

Der Erfindung liegt die Aufgabe zugrunde, ein Bestrahlungsgerät anzugeben, bei dem die Strahlung einer Strahlungsröhre mittels einer unaufwendigen und raumsparenden Einrichtung möglichst weitgehend ausgenutzt wird, um Strahlung gleichmäßiger Leuchtdichte in dem jeweils geeigneten Spektralbereich über eine begrenzte Fläche zur Verfügung zu stellen.

Die erfindungsgemäße Lösung dieser Aufgabe ist im Kennzeichenteil des Anspruchs 1 angegeben. Das danach vorgesehene, die Strahlungsröhre umgebende, und vorzugsweise eine Hülse bildende Bauelement ist mit strahlungsdurchlässigem Material mit einem oder mehreren Fluoreszenzstoffen versehen, die sich so wählen lassen, daß die Fluoreszenzstrahlung in dem für den Bestrahlungszweck jeweils geeigneten Spektralbereich liegt. Es sind sowohl organische als auch anorganische Fluoreszenzstoffe einsetzbar. Dabei kann sowohl monochromatische als auch Mischstrahlung (z.B. weißes Licht) erzeugt werden. Wenn die Hülse die Strahlungsröhre vollständig umschließt, läßt sich deren Strahlung im wesentlichen vollständig zur Anregung der Fluoreszenz ausnutzen. Die isotrope Strahlung der einzelnen Fluoreszenzpartikel verbleibt bei ausreichender Dünnwandigkeit der Hülse aufgrund der Totalreflexion, die daraus resultiert, daß das Hülsenmaterial einen Brechungsindex gegen die Umgebung von größer als 1, vorzugsweise größer als 1,45 hat, größtenteils in der Hülse und bewegt sich auf kreisförmigen Zickzack-Bahnen verlustarm zur Austrittsfläche. Auf diese Weise läßt sich mit unaufwendigen Mitteln die Strahlung der im Innern der Hülse angeordneten Strahlungsröhre fast vollständig absorbieren, die Strahlungsenergie in ein begrenztes Spektralband umwandeln und mit hoher Dichte an einer definierten Fläche zur Verfügung stellen.

Die Weiterbildungen der Erfindung nach den Ansprüchen 2 bis 5 ergeben besonders effektive und in ihrem Aufbau einfache Gestaltungen, die dazu dienen, das Fluoreszenzlicht in Axialrichtung der Strahlungsröhre zu führen und an einem axialen Austrittsende der Hülse konzentriert abzugeben. Die Ausgestaltungen nach den Ansprüchen 6 und 7 beziehen sich dagegen auf eine Anordnung, bei der die Fluoreszenzstrahlung an einer längs der Strahlungsröhre verlaufenden und von dieser weg weisenden langgestreckten Austrittsfläche abgegeben wird. Die Weiterbildung der Erfindung nach Anspruch 10 ist insofern günstig, als die Hülse selbst vollständig transparent sein und daher die Fluoreszenzstrahlung zur Austrittsfläche mit möglichst geringen Verlusten transportieren kann. Bei der Weiterbildung der Erfindung nach Anspruch 11 werden Verluste der Fluoreszenzstrahlung durch Reabsorption vermieden. Eine weitere Steigerung des Wirkungsgrades läßt sich gemäß Anspruch 12 dadurch erzielen, daß die von der ersten Hülse nicht total-reflektierte Strahlung von der zweiten Hülse aufgefangen und in dieser erneut zur Anregung von Fluoreszenzstrahlung ausgenutzt wird. Die Weiterbildung nach Anspruch 13 ist für die praktische Gestaltung eines Bestrahlungsgerätes günstig.

Ausführungsbeispiele der Erfindung werden nachstehend anhand der Zeichnungen näher erläutert. In den Zeichnungen

- 4 -                    0169371

zeigen

Fig. 1 und 2   schematische Schnittdarstellungen zur
zur Erläuterung des der Erfindung zugrundeliegenden Prinzips;

Fig. 3 bis 6  Ausführungsbeispiele eines Bestrahlungsgerätes mit axialem Strahlungsaustritt; und

Fig. 7  ein Ausführungsbeispiel mit radialem Strahlungsaustritt.

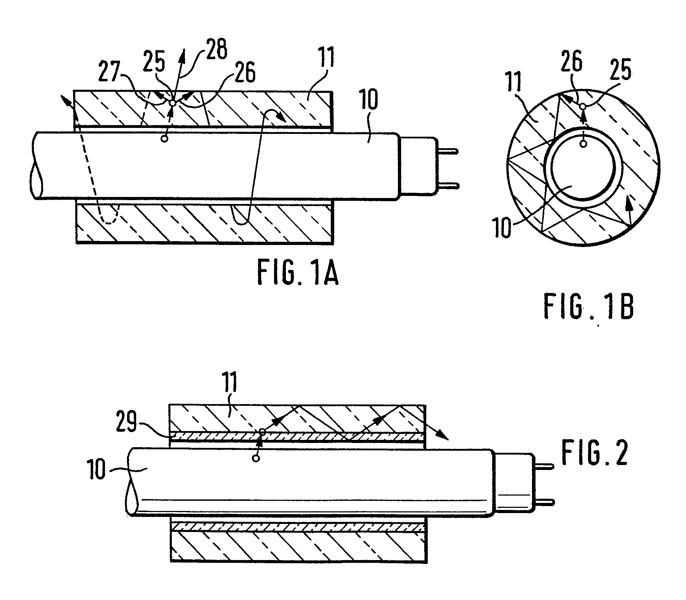

Gemäß Fig.1 ist eine Leuchtstoffröhre 10 von einer
Hülse 11 konzentrisch umgeben, die aus strahlungsdurchlässigem Material, etwa Glas oder Kunststoff, insbesondere
Polymethylmethacrylat, mit einem Brechungsindex gegen
Luft größer als 1 besteht. Dieses Material ist
mit einem fluoreszierenden Farbstoff dotiert, von dem eine
Partikel in den schematischen Darstellungen nach Fig. 1A
und 1B bei 25 angedeutet ist. Wird diese Farbstoffpartikel
von Strahlung aus der Leuchtstoffröhre 10 getroffen, so
wird sie zur Fluoreszenz angeregt. Von der von diesem
Fluoreszenzzentrum ausgehenden isotropen Strahlung sind
in der Längsschnittdarstellung der Fig. 1A   drei Strahlen
veranschaulicht, nämlich ein Strahl 26, der nach rechts
derart schräg auf die äußere Grenzfläche der Hülse 11
trifft, daß er dort total-reflektiert wird und sich auf
einer in Fig. 1A   sowie in der Querschnittsdarstellung
nach Fig. 1B   schematisch gezeigten kreisförmigen Zickzack-
Bahn zum rechten Ende der Hülse 11 bewegt. Ein zweiter
Strahl 27 trifft in entgegengesetzter Richtung auf die äußere
Grenzfläche der Hülse und bewegt sich auf einer ähnlichen
kreisförmigen Zickzack-Bahn zum linken Ende der Hülse 11.
Zwei weitere, in Fig. 1A   nicht eigens veranschaulichte
Strahlen werden ebenfalls einer kreisförmigen Zickzack-Bahn
gemäß der Darstellung nach Fig. 1B   folgen, ohne jedoch
in Axialrichtung der Hülse fortzuschreiten. Dargestellt
ist ferner ein dritter Strahl 28, der die äußere Grenzfläche der Hülse 11 derart steil trifft, daß er nicht
reflektiert wird, sondern die Hülse 11 als Verluststrahlung
verläßt. Der in der Hülse 11 verbleibende total-reflektierte Anteil T der gesamten Fluoreszenzstrahlung beträgt etwa

$$T = (1 - \frac{1}{n^2})^{1/2},$$

wobei n der Brechungsindex des Hülsenmaterials ist. Bei einem Brechungsindex von n = 1,49 für Polymethylmethacrylat ergibt sich ein Wert von T = 0,75, daß heißt ein Verlust von etwa 25%.

Die Verwendung von Kunststoff für das Material der Hülse 11 hat die Wirkung, daß kurzwellige Strahlungsteile der Leuchtstoffröhre 10, etwa unter 400 nm, in Kunststoffen mit in diesem Wellenlängenbereich verminderter Transmission nur kurze Wege bis zur Absorption durch eine Fluoreszenzstoff-Partikel zurückzulegen haben,während das längerwellige Fluoreszenzlicht fast verlustfrei lange Wege im Kunststoff durchlaufen kann.

Die Hülse 11 ist in der Lage, die in ihrem Innern von der Leuchtstoffröhre 10 emittierte Strahlung fast vollständig zu absorbieren und Strahlung eines begrenzten Spektrums als Fluoreszenzstrahlung abzugeben, wobei der überwiegende Anteil dieser Fluoreszenzstrahlung im wesentlichen senkrecht zu der radialen Emissionsrichtung der Leuchtstoffröhre 10 und zwar in Axial- und in Umfangsrichtung zu dieser geführt wird und an den Stirnflächen der Hülse 11 und/oder einer seitlich an dieser vorgesehenen Austrittsfläche mit hoher Dichte zur Verfügung steht.

Dieser Vorgang trifft für alle Wellenlängen der elektromagnetischen Strahlung im ultravioletten, visuellen und infraroten Spektralbereich zu, wobei die Umwandlung stets von einer niedrigeren Wellenlänge auf die gleiche oder eine höhere Wellenlänge erfolgt. Vorteilhafterweise ist der fluoreszierende Farbstoff so gewählt, daß sein Absorptionsspektrum und sein Emissionsspektrum einander wenig, insbesondere um weniger als 25 %, überlappen, um Verluste durch Reabsorption zu vermeiden.

Fluoreszierende Farbstoffe, die sich für den beschriebenen Zweck eignen, sind aus den deutschen Offenlegungschriften Nr. 3 001 857 und Nr. 3 235 526 bekannt.

Während bei dem Ausführungsbeispiel nach Fig. 1
angenommen ist, daß die fluoreszierenden Farbstoffe
in das Material der Hülse 11 eingebettet sind, läßt sich
der gleiche Effekt der Umwandlung und Umlenkung der von
der Leuchtstoffröhre 10 emittierten Strahlung gemäß
Fig. 2 dadurch erreichen, daß auf der inneren und/oder
der äußeren Wand der Hülse 11 ein dünner Film 29 aus
mit fluoreszierendem Farbstoff dotiertem strahlungsdurchlässigen Material aufgebracht wird, wobei die Hülse 11
in diesem Fall aus undotiertem strahlungsdurchlässigen
Material besteht.

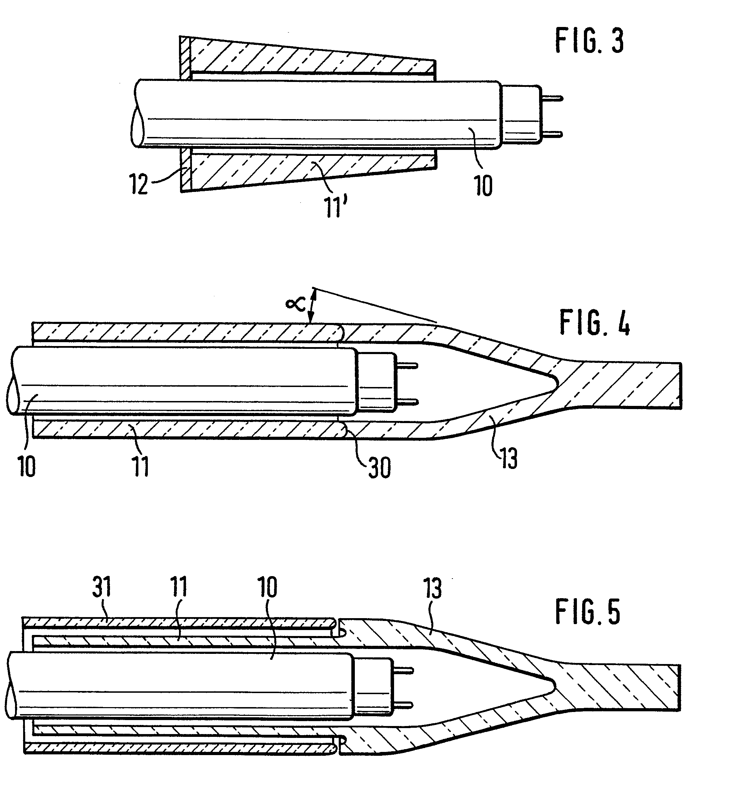

Die Strahlungsdichte an den Stirnflächen der Hülse 11
hängt von der Wandstärke ab. Fig. 3 zeigt eine Variante,
bei der die Hülse 11' leicht konisch mit vom linken zum
rechten Ende abnehmender Dicke gestaltet ist. Dadurch
läßt sich die Strahlungsdichte an der rechten Stirnfläche
der Hülse 11' erhöhen. In Fig. 3 ist ferner am linken Ende
der Hülse 11' eine Verspiegelung (12) gezeigt, bei der
es sich um eine aufgedampfte Silber- oder Aluminiumschicht
handeln kann. Dadurch wird die nach links gerichtete
Fluoreszenzstrahlung reflektiert, so daß die am rechten
Ende austretende Strahlung verstärkt wird.

Eine Bündelung der an der rechten Stirnfläche der
Hülse 11 zur Verfügung stehenden Strahlung wird dadurch
erreicht, daß gemäß Fig. 4 an diese Stirnfläche ein
verjüngend zusammengeführtes Übergangsteil 13 anschließt,
das die ringförmige Querschnittsfläche der Hülse 11 auf
eine geschlossene, beispielsweise kreisförmige, Querschnittsfläche vereinigt. Die Umlenkung der Strahlung in
diesem Übergangsteil 13 ist problemlos, sofern der in Fig. 4
eingezeichnete Konuswinkel α ausreichend klein ist. Das
Übergangsteil 13 besteht vorzugsweise aus undotiertem Material, um Reabsorption der in der Hülse erzeugten Fluoreszenzstrahlung mindestens in diesem Teil zu vermeiden.

Das Übergangsteil 13 kann an die Hülse 11 einstückig angeformt sein; es kann jedoch auch aus anderem, strahlungsdurchlässigem Material bestehen und an die Hülse angesetzt sein, wobei die Austrittsfläche 30 der Hülse in diesem Fall zur Verbesserung der Lichteinkopplung in das undotierte Übergangsteil 13 vorzugsweise konvex gekrümmt ist.

Die in Fig. 5 gezeigte Variante erbringt eine wesentliche Erhöhung des optischen Wirkungsgrades dadurch, daß die innere Hülse 11 von einer zweiten, äußeren Hülse 31 umgeben ist. Dabei ist die innere Hülse 11 mit einem Farbstoff dotiert, der die Strahlung der Leuchtstoffröhre 10 absorbiert und in einem höheren Spektralbereich fluoresziert, während die äußere Hülse 31 mit einem Farbstoff dotiert ist, der im Spektralbereich der von der inneren Hülse 11 emittierten Fluoreszenzstrahlung absorbiert und in einem noch höheren Wellenlängenbereich fluoresziert. Somit wird die bei Verwendung von Polymethylmethacrylat als Hülsenmaterial gegebene 25-prozentige Verluststrahlung der inneren Hülse 11 größtenteils von der äußeren Hülse 31 erneut in Floreszenzstrahlung umgewandelt, und diese Fluoreszenzstrahlung wird wiederum zu eta 75% innerhalb der äußeren Hülse weitergeleitet. Die Einkopplung und Vermischung der Strahlungen der beiden Hülsen 11 und 31 erfolgt dabei an der Eintrittsfläche des Übergangsteils 13.

In den Darstellungen nach Fig. 1 bis 5 ist eine gerade Leuchtstoffröhre 10 veranschaulicht, bei deren Verwendung der gesamte Aufbau in Querschnitt kreisförmig wird. Derartige Leuchtstoffröhre weisen an beiden Enden elektrische Anschlüsse auf, wobei die Zuführung zu den in den Zeichnungen rechten Anschlüssen durch das Übergangsteil 13 hindurch oder innerhalb des Zwischenraums zwischen Leuchtstoffröhre 10 und Hülse 11 erfolgen kann.

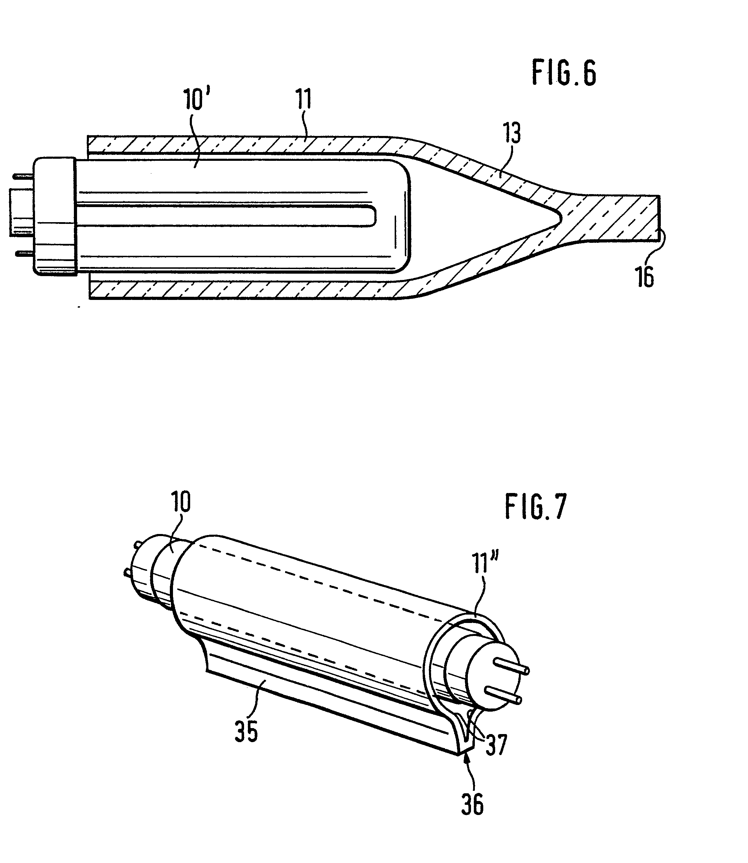

Die Variante nach Fig. 6 arbeitet dagegen mit einer U-förmig gebogenen Leuchtstoffröhre 10', die nur an ihrem gemäß der Zeichnung linken Ende Anschlüsse aufweist, daher einfacher mit Strom versorgbar und leichter auswechselbar ist und zur einer handlicheren Größe des gesamten Gerätes führt.

Bei der Ausführungsform nach Fig. 7 ist die die Leuchtstoffröhre 10 umgebende Hülse 11" derart gestaltet, daß sie ein parallel zur Leuchtstoffröhre 10 verlaufendes Austrittsteil 35 mit einer von der Leuchtstoffröhre radial nach außen weisenden Austrittsfläche 36 aufweist. Die Innenwand der Hülse 11" ist dabei mit einem in das Austrittsteil 35 hinein verlaufenden, im Querschnitt etwa zwickelförmigen Flächenbereich 37 versehen. Bei dieser Gestaltung sind beide axialen Stirnflächen der Hülse 11" verspiegelt, um einen Lichtaustritt an diesen Stellen zu vermeiden.

Während sich die in Fig. 4 bis 6 gezeigten Ausführungsbeispiele der Erfindung zur Bestrahlung kleiner "punktförmiger" Flächen eignen, beispielsweise zum Auspolymerisieren einer in eine Zahnkavität eingebrachten Kunststoff-Füllmasse, dient die Ausführungsform nach Fig. 7 zur linienförmigen Bestrahlung, etwa zur Belichtung von vorbeilaufenden Flächen in der Kopiertechnik oder auch in der Drucktechnik, wo beispielsweise mit ultraviolettaushärtenden Farbstoffen gearbeitet wird.

In den obigen Ausführungsbeispielen ist die Strahlungsröhre 10 als Leuchtstoffröhre angenommen worden, die gewöhnlich im sichtbaren Bereich emittiert. Statt dessen können auch andere Strahlungsröhren, die z.B. im UV-Bereich emittieren, oder auch röhrenförmige Lampen z.B. mit axial verlaufendem Glühfaden eingesetzt werden.

- 9 -

0169371

PATENTANSPRÜCHE

1.    Bestrahlungsgerät mit einer Strahlungsröhre (10) und einer Lichtleiteinrichtung (11), die Strahlung der Strahlungsröhre (10) aufnimmt und an einer vorgegebenen Stelle Strahlung abgibt, dadurch  g e k e n n z e i c h n e t , daß die Lichtleiteinrichtung ein die Strahlungsröhre (10) mindestens teilweise umgebendes Bauelement (11) umfaßt, das strahlungsdurchlässiges Material mit einem Brechungsindex gegen seine Umgebung größer als 1 aufweist und mit Fluoreszenzstoff versehen ist, dessen Absorptionsspektrum das Emissionsspektrum der Strahlungsröhre (10) mindestens teilweise überlappt.

2.    Gerät nach Anspruch 1, dadurch  g e k e n n z e i c h - n e t ,  daß das Bauelement eine die Strahlungsröhre (10) umgebende Hülse (11) ist, deren ringförmiger Querschnitt an ihrem axialen Ende mittels eines sich verjüngenden Übergangsteils (13) auf eine geschlossene Austrittsfläche (16) zusammengeführt ist.

3. Gerät nach Anspruch 2, dadurch g e k e n n z e i c h - n e t , daß das Übergangsteil (13) mit der Hülse (11) einstückig geformt ist.

4. Gerät nach Anspruch 2 oder 3, dadurch g e k e n n - z e i c h n e t , daß die Hülse (11) an ihrem anderen Ende verspiegelt (12) ist.

5. Gerät nach einem der Ansprüche 2 bis 4, dadurch g e - k e n n z e i c h n e t , daß die Hülse (11') mit auf das gesagte eine Ende zu abnehmender Dicke konisch geformt ist.

6. Gerät nach Anspruch 1, dadurch g e k e n n z e i c h n e t , daß das Bauelement eine die Strahlungsröhre (10) umgebende Hülse (11") ist, die einen längs der Strahlungsröhre (10) verlaufenden Austrittsteil (35) mit einer von der Strahlungsröhre (10) weg nach außen weisenden Austrittsfläche (36) aufweist.

7. Gerät nach Anspruch 6, dadurch g e k e n n z e i c h - n e t , daß die Innenwand der Hülse (11") einen in den Austrittsteil (35) hinein verlaufenden, im Querschnitt zwickelförmigen Flächenbereich (37) aufweist.

8. Gerät nach einem der Ansprüche 1 bis 7, dadurch g e k e n n - z e i c h n e t , daß das Bauelement (11) aus Glas oder Kunststoff, vorzugsweise Polymethylmethacrylat, besteht.

9. Gerät nach einem der Ansprüche 1 bis 8, dadurch g e k e n n z e i c h n e t , daß der Fluoreszenz- stoff im Material des Bauelements (11) enthalten ist.

10. Gerät nach einem der Ansprüche 1 bis 8, dadurch g e k e n n z e i c h n e t , daß der Fluoreszenz- stoff in einem auf der inneren und/oder äußeren Oberfläche des Bauelements (11) angeordneten Film (29) enthalten ist.

11. Gerät nach einem der Ansprüche 1 bis 10, dadurch g e k e n n z e i c h n e t , daß der Spektralbereich, in dem der Fluoreszenzstoff emittiert, den Spektralbereich, in dem er absorbiert, um weniger als 25 % überlappt.

12. Gerät nach einem der Ansprüche 1 bis 11, dadurch g e k e n n z e i c h n e t , daß das Bauelement eine die Strahlungsröhre (10) umgebende Hülse (11) ist, die von einer ebenfalls mit dem Lichtleiter (15) gekoppelten zweiten Hülse (31) umgeben ist, und daß die zweite Hülse (31) mit einem Fluoreszenzstoff versehen ist, der vom Fluoreszenzstoff der ersten Hülse (11) emittierte Strahlung absorbiert.

13. Gerät nach einem der Ansprüche 1 bis 12, dadurch g e k e n n z e i c h n e t , daß die Strahlungsröhre (10) U-förmig gebogen ist und das Bauelement (11) beide Schenkel der U-Form umgibt.

14. Gerät nach einem der Ansprüche 1 bis 13, dadurch

g e k e n n z e i c h n e t, daß die Strahlungsröhre (10)

eine Leuchtstoffröhre ist.

FIG.1A

FIG.1B

FIG.2

FIG. 3

12    11'    10

FIG. 4

∝

10    11    30    13

FIG. 5

31    11    10    13

FIG.6

FIG.7

0169371

Nummer der Anmeldung

EP  85 10 7562

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 934 140  (PAPE)  * Insgesamt * | 1-4,8, 9 | F 21 V   9/16 F 21 K   2/00 |
| X | FR-A-2 404 347  (SIEMENS) * Seite 9, Zeilen 2-13 * | 1 | |
| A | EP-A-0 029 199  (PAPE)  * Seite 2, Zeilen 15-31 * | 1,9,10 ,14 | |
| A | EP-A-0 022 198  (SIEMENS) * Figur 4 * | 6 | |

RECHERCHIERTE SACHGEBIETE (Int. Cl 4)

F 21 V
F 21 K
F 21 S
A 61 C
G 09 F

Der vorliegende Recherchenbericht wurde für alle Patentansprüche erstellt

| Recherchenort DEN HAAG | Abschlußdatum der Recherche 01-10-1985 | Prüfer FOUCRAY R.B.F. |
|---|---|---|